# EUROPÄISCHE PATENTSCHRIFT

(11) **EP 2 295 886 B1**
(45) Veröffentlichungstag und Bekanntmachung des Hinweises auf die Patenterteilung: **24.06.2015**
(21) Anmeldenummer: 10006928.5
(22) Anmeldetag: 05.07.2010
(51) Int. Cl.: F24H 1/14

(54) **Vorrichtung zum Erwärmen von Flüssigkeiten**
Device for heating liquids
Dispositif de chauffage de liquides

(30) Priorität: 21.08.2009 DE 102009038978
(43) Veröffentlichungstag der Anmeldung: 16.03.2011
(73) Patentinhaber: BorgWarner Ludwigsburg GmbH, 71636 Ludwigsburg (DE)
(72) Erfinder: Luppold, Michael, 76706 Dettenheim (DE); Meeh, Martin, 75446 Wiernsheim (DE); Dauth, Alexander, 75433 Maulbronn (DE); Weigold, Jörg, 76131 Karlsruhe (DE); Etzkorn, Hans-Peter, 76646 Bruchsal (DE); Kochems, Jürgen, 71254 Ditzingen (DE); Lehmann, Klaus, 75038 Oberderdingen (DE)
(74) Vertreter: Twelmeier Mommer & Partner

(56) Entgegenhaltungen:
- EP-A1- 0 899 985
- EP-A1- 1 872 986
- EP-A2- 0 104 673
- GB-A- 2 014 417
- US-A- 941 215
- US-B1- 6 330 395

## Beschreibung

Die Erfindung betrifft eine Vorrichtung zum Erwärmen von Flüssigkeiten mit einem Gehäuse, das einen von der zu erwärmenden Flüssigkeit durchströmbaren Innenraum mit einer Gehäuseöffnung zum Flüssigkeitseintritt und einer Gehäuseöffnung zum Flüssigkeitsaustritt aufweist.

Aus der US 6 330 395 B1 ist eine Vorrichtung zum Erwärmen von Flüssigkeiten bekannt, die ein mehrteilges Gehäuse aufweist. Vierkantige Strangpressprofile, die jeweils parallel verlaufende Strömungskanäle und einen Kanal zur Aufnahme von Heizelementen aufweisen, sind in eine stirnseitige Abdeckung eingesetzt, welche die dortigen Enden der Strömungskanäle verbindet, und an ihren rückwärtigen Enden mit Kappen verschlossen, die benachbarte Strömungskanäle eines jeden Strangpressprofils verbinden.

Aus der EP 1 872 986 A1 ist eine Vorrichtung zum Erwärmen von Flüssigkeiten bekannt, die ein Gehäuse mit einer Öffnung zum Flüssigkeitseintritt und einer Öffnung zum Flüssigkeitsaustritt aufweist. An einem Deckel dieses Gehäuses sind Heizungsgehäuse befestigt, die in den Gehäuseinnenraum hineinragen und von der zu erwärmenden Flüssigkeit umströmt werden.

Derartige Vorrichtungen werden beispielsweise in Fahrzeugen benötigt, um wässrige Flüssigkeiten, in der Regel Mischungen aus Wasser und einem Frostschutzmittel, beispielsweise Glykol, zu erwärmen. Dabei stellt sich das Problem, dass relativ große Energiemengen möglichst gleichmäßig und rasch in die zu erwärmende Flüssigkeit eingebracht werden sollen. Eine punktuelle Erwärmung der Flüssigkeit sollte möglichst vermieden werden, da eine solche zu einer lokalen Überhitzung und Zersetzung der Flüssigkeit führen kann.

Aufgabe der vorliegenden Erfindung ist es, einen Weg aufzuzeigen, wie Wärmeenergie rasch und gleichmäßig in eine zu erwärmende Flüssigkeit eingebracht werden kann.

Diese Aufgabe wird durch eine Vorrichtung mit den im Anspruch 1 angegebenen Merkmalen gelöst. Vorteilhafte Weiterbildungen der Erfindung sind Gegenstand von Unteransprüchen.

Eine erfindungsgemäße Vorrichtung hat ein Gehäuse, in dem ein von der zu erwärmenden Flüssigkeit durchströmbarer Kanal verläuft, der von einer Gehäuseöffnung zum Flüssigkeitseintritt zu einer Gehäuseöffnung zum Flüssigkeitsaustritt führt. Der Kanal verläuft dabei in mehreren Windungen an einer Gehäusewand entlang, die wenigstens ein Heizungsgehäuse trägt, in dem wenigstens ein elektrisches Heizelement angeordnet ist. Vorteilhaft kann die Gehäusewand auf diese Weise eine Wärmeverteilplatte bilden, welche die von dem oder den Heizelementen erzeugte Wärme großflächig verteilt. Die erzeugte Wärme kann deshalb von einer in dem Strömungskanal mit mehreren Windungen an der Gehäusewand entlang strömenden Flüssigkeit rasch und gleichmäßig aufgenommen werden kann.

Bevorzugt hat die Gehäuseöffnung zum Flüssigkeitseintritt eine größere Querschnittsfläche, besonders bevorzugt eine größere Weite, als der Kanal. Auf diese Weise wird die Fließgeschwindigkeit der zu erwärmenden Flüssigkeit beim Eintritt in den Heizer erhöht. Vorteilhaft kann auf diese Weise ein besserer Wärmeaustausch erreicht werden. Die Querschnittfläche einer Öffnung wird ebenso wie die Querschnittsfläche eines Kanals senkrecht zur Strömungsrichtung gemessen. Die Querschnittsfläche der Eintrittsöffnung ist deshalb die freie Öffnungsfläche.

Bevorzugt ist das Gehäuse aus mindestens zwei Gehäuseteilen zusammengefügt, zwischen denen der Strömungskanal verläuft. Die beiden Gehäuseteile können stoffschlüssig, beispielsweise durch Verschweißen, flüssigkeitsdicht miteinander verbunden sein. Es ist aber auch möglich, dass zwischen den Gehäuseteilen eine Dichtung verpresst ist und auf diese Weise eine flüssigkeitsdichte Verbindung der beiden Gehäuseteile erreicht wird. Hierfür können die Gehäuseteile von Schrauben zusammengehalten werden, so dass ein zwischen den Gehäuseteilen liegender Dichtring verpresst wird. Die beiden Gehäuseteile weisen bevorzugt jeweils eine plattenförmige Wand auf, die den Boden bzw. einen Deckel des Gehäuses bildet.

Eine vorteilhafte Weiterbildung der Erfindung sieht dabei vor, dass zumindest eines der beiden Gehäuseteile an seiner Innenseite eine Struktur zur Ausbildung des Kanals aufweist. Die Struktur kann beispielsweise durch eine Nut in dem Gehäuseteil bestehen und/oder durch nach innen ragende Erhebungen gebildet sein, die den Kanal begrenzen. Eine solche Struktur kann besonders vorteilhaft bei einem Gussteil ausgebildet sein. Bevorzugt ist deshalb wenigstens eines der beiden Gehäuseteile, insbesondere das die beiden Öffnungen aufweisende Gehäuseteil, ein Gussteil.

Bevorzugt bilden die Gehäuseteile Wände des Kanals. Eine durch den Kanal strömende Flüssigkeit tritt deshalb mit den beiden Gehäuseteilen in Kontakt und kann von diesen Wärme effizient aufnehmen.

Bevorzugt ist das wenigstens eine Heizelement ein PTC-Heizelement. Besonders bevorzugt ist dabei, dass das PTC-Heizelement in dem Heizungsgehäuse zwischen zwei gegenüber dem Heizungsgehäuse elektrisch isolierten Kontaktplatten angeordnet ist, die aus dem Heizungsgehäuse herausragen.

Bevorzugt ist in die beiden Gehäuseöffnungen jeweils eine Gewindetülle eingeschraubt ist.

Weitere Einzelheiten und Vorteile der Erfindung werden an Ausführungsbeispielen unter Bezugnahme auf die beigefügten Zeichnungen erläutert. Gleiche und einander entsprechende Teile sind dabei mit übereinstimmenden Bezugszahlen versehen. Es zeigen:
- Figur 1:: Ein Ausführungsbeispiel einer erfindungsgemäßen Vorrichtung;
- Figur 2:: eine weitere Ansicht zu Figur 1;
- Figur 3:: eine Schnittansicht entlang der Schnittlinie AA von Figur 2;
- Figur 4:: ein weiteres Ausführungsbeispiel einer erfindungsgemäßen Vorrichtung;
- Figur 5:: eine Seitenansicht zu Figur 4;
- Figur 6:: eine Schnittansicht zu Figur 4 entlang der Schnittlinie AA;
- Figur 7:: eine Schnittansicht zu Figur 5 entlang der Schnittlinie CC;
- Figur 8:: eine Seitenansicht zu Figur 4; und
- Figur 9: eine Schnittansicht zu Figur 4 entlang BB.

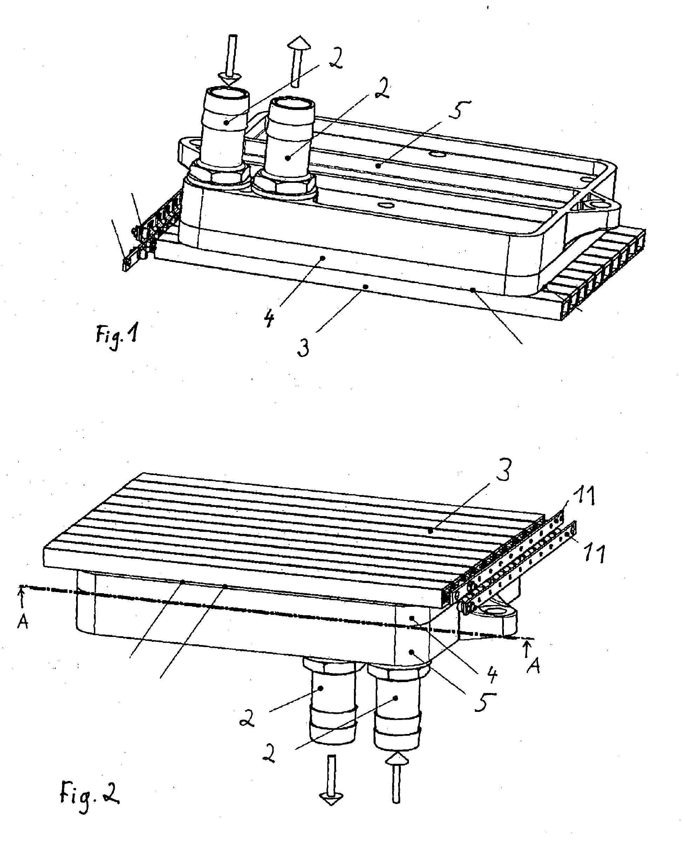

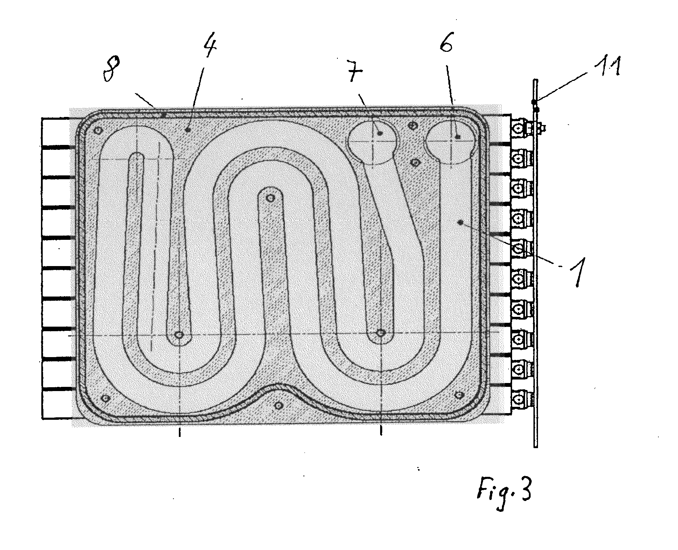

Die in den Figuren 1 bis 3 dargestellte Vorrichtung dient zum Erwärmen von wässrigen Flüssigkeiten in Fahrzeugen, insbesondere Mischungen aus Wasser und Frostschutzmittel, beispielsweise Glykol. Die Vorrichtung hat ein Gehäuse, in dem ein von der zu erwärmenden Flüssigkeit durchströmbare Kanal 1 verläuft, der von einer Gehäuseöffnung 6 zum Flüssigkeitseintritt zu einer Gehäuseöffnung 7 zum Flüssigkeitsaustritt führt. In den beiden Gehäuseöffnungen 6, 7 ist jeweils eine Tülle 2 eingesetzt, beispielsweise eine eingeschraubte Gewindetülle. Der Kanal 1 läuft mit mehreren Windungen an einer Gehäusewand entlang, die mehrere als Vierkantrohre ausgebildete Heizungsgehäuse 3 trägt, in denen jeweils wenigstens ein, bevorzugt mehrere, elektrische Heizelemente, angeordnet sind. Die beiden Gehäuseöffnungen 6, 7 haben eine größere Querschnittsfläche als der Kanal 1. Eine zu erwärmende Flüssigkeit strömt in dem Kanal deshalb schneller als in an die Öffnungen angeschlossenen Leitungen. Die größere Querschnittsfläche der Öffnung 6, 7 wird bei dem dargestellten Ausführungsbeispiel erreicht, indem die Öffnung 6, 7 eine größere Weite als der Kanal 1 hat.

Bei dem dargestellten Ausführungsbeispiel ist das Gehäuse aus zwei Gehäuseteilen 4, 5 zusammengefügt, zwischen denen der mäanderförmige Strömungskanal 1 verläuft. Zwischen den beiden durch Schrauben miteinander verbundenen Gehäuseteilen 4, 5 ist ein Dichtring 8 verpresst. Eines oder beide Gehäuseteile 4, 5 können beispielsweise durch Grießen, insbesondere durch Druckguss bzw. Spritzguss, herge-stellt sein. Der Kanal 1 kann in einem als Gussteil ausgebildeten Gehäuseteil 4, 5 vorteilhaft durch eine innere Struktur ausgebildet sein, die bei dem dargestellten Ausführungsbeispiel eine Nut ist.

Eines der beiden Gehäuseteile 4 trägt die in den Heizungsgehäusen 3 enthaltenen Heizelemente, während das andere Gehäuseteil 5 die Gehäuseöffnungen 6, 7 zum Flüssigkeitseintritt und Flüssigkeitsaustritt aufweist. Die Gehäuseöffnungen 6, 7 sind also in einer Gehäusewand angeordnet, die der die Heizungsgehäuse 3 tragenden Gehäusewand gegenüberliegt.

Bei dem dargestellten Ausführungsbeispiel sind die Heizungsgehäuse 3 als ein Strangpressprofil ausgebildet, das an einem Gehäuseteil 4 befestigt ist, beispielsweise durch Löten, Schweißen oder mit einem Wärmeleitkleber. Die Gehäusewand dieses Gehäuseteils 4 bildet eine Wärmeverteilplatte, bewirkt also eine flächige Verteilung der von den Heizelementen erzeugten Wärme, so dass diese von einer durch den Kanal strömenden Flüssigkeit aufgenommen werden kann.

Anstatt das Strangpressprofil an dem Gehäuse zu befestigen, ist es auch möglich, dass das Strangpressprofil eine Gehäusewand und somit einen Gehäuseteil bildet, der beispielsweise als Gehäusedeckel das Gehäuse verschließt. Beispielsweise kann das Strangpressprofil eine die einzelnen Rohrgehäuse verbindende Platte aufweisen, welche eine Gehäusewand bildet.

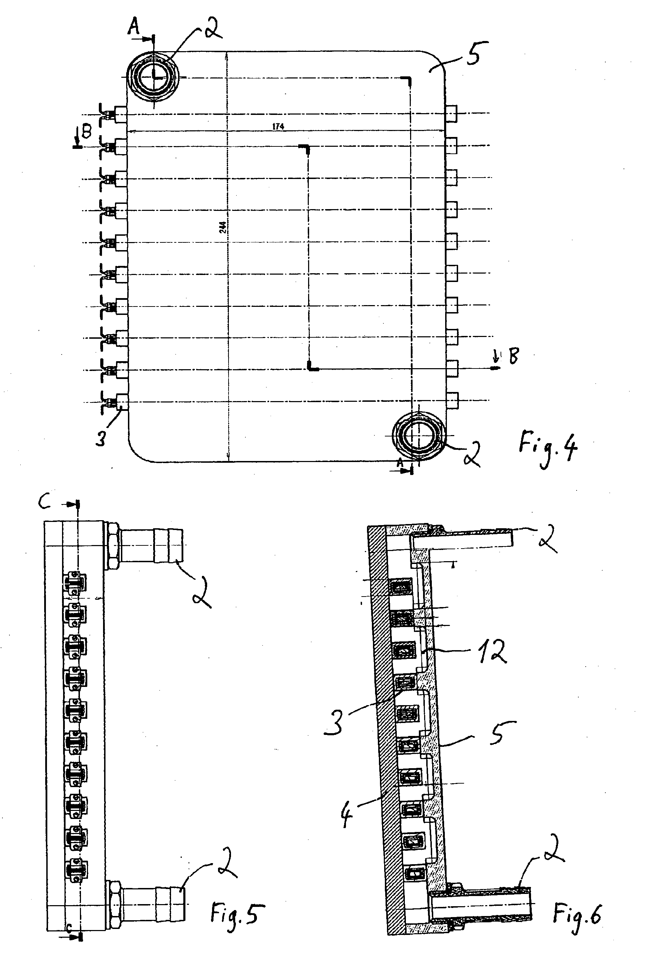

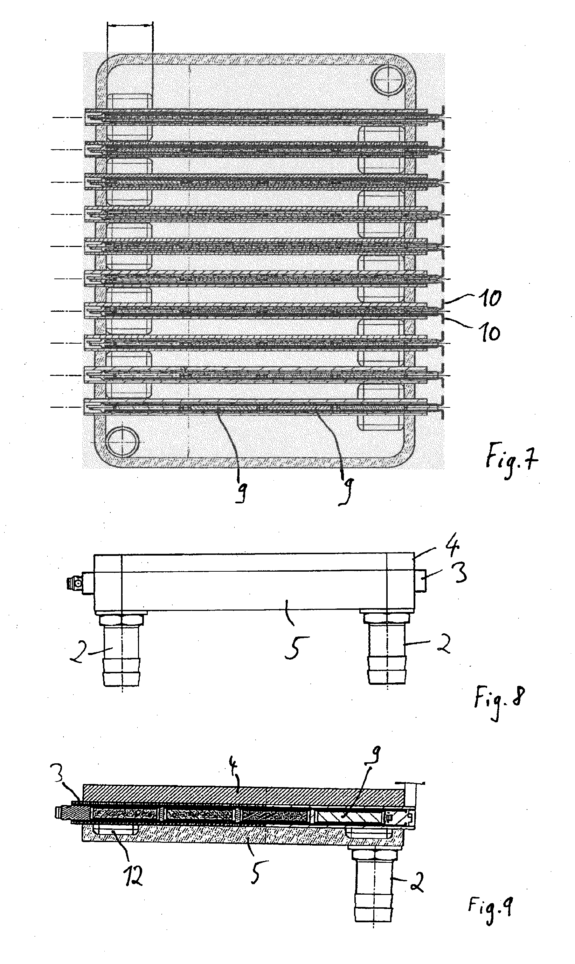

In den Figuren 4 bis 9 ist ein weiteres Ausführungsbeispiel dargestellt, das ebenfalls ein aus zwei Teilen 4, 5 zusammengefügtes Gehäuse aufweist, in dem ein von der zu erwärmenden Flüssigkeit durchströmbarer Kanal 1 zwischen zwei Gehäuseöffnungen verläuft. Ähnlich wie bei dem vorstehend beschriebenen Ausführungsbeispiel verläuft der Kanal 1 in mehreren Windungen an einer Gehäusewand entlang, die mehrere als Rohre ausgebildete Heizungsgehäuse 3 trägt, in denen jeweils mehrere elektrische Heizelemente 9 angeordnet sind. Im Unterschied zu dem vorstehend beschriebenen Ausführungsbeispiel sind die Heizungsgehäuse 3 aber nicht außen an dem durchströmbaren Gehäuse der Vorrichtung, sondern in dessen durchströmbaren Innenraum angeordnet. Die Heizungsgehäuse 3 werden im Betrieb also von einer zu erwärmenden Flüssigkeit umspült, die mäanderförmig an den einzelnen Heizungsgehäusen 3 entlang geführt wird. Auf diese Weise kann vorteilhaft eine noch bessere Wärmeankopplung der Heizungsgehäuse 3 an die zu erwärmende Flüssigkeit erreicht werden.

Bei den in den Heizungsgehäusen 3 angeordneten Heizelementen 9 handelt es sich um PTC-Heizelemente, bevorzugt um keramische Heizelemente, beispielsweise auf Basis von Bariumtitanat. PTC-Heizelemente zeigen bei einer kritischen Temperatur einen sprunghaften Anstieg ihres elektrischen Widerstandes, so dass eine Überhitzung weitestgehend ausgeschlossen ist. Die Heizelemente 9 sind in den Heizungsgehäusen 3 zwischen zwei Kontaktplatten 10 angeordnet, die elektrisch gegenüber den Heizungsgehäusen 3 isoliert sind und aus den Heizungsgehäusen 3 herausragen. Wie insbesondere in Figur 2 erkennbar, sind die Kontaktplatten 10 an ihren herausragenden Enden umgebogen und zur Spannungsversorgung an quer zu ihrer Längsrichtung verlaufende Stromschienen 11 angeschlossen. Die Stromschienen 11 können ebenso wie die Kontaktplatten 10 als Blechstreifen ausgebildet sein. Die Kontaktplatten 10 sind bei dem dargestellten Ausführungsbeispiel mit den Stromschienen 11 verschraubt. Vorteilhaft können die Kontaktplatten 10 mit den Kontaktschienen auch durch Stecken oder Schweißen verbunden sein.

Um die Wärmeankopplung der Heizelemente 9 an die Heizungsgehäuse 3 zu verbessern, können die Heizungsgehäuse 3 nach dem Einbringen der PTC-Elemente verpresst werden. Dies kann vor dem Zusammenbau des flüssigkeitsdurchströmbaren Gehäuses geschehen. Möglich ist es auch, die Heizungsgehäuse 3 zu verpressen, indem mit einer Presskraft auf die beiden Gehäuseteile 4, 5 eingewirkt wird, zwischen denen die Heizungsgehäuse 3 angeordnet sind. In diesem Fall ist darauf zu achten, dass die Kontaktplatten 10 in den Heizungsgehäusen 3 so angeordnet sind, dass ihre Flachen der Gehäuseoberseite bzw. der Gehäuseunterseite, auf welche die Presskraft einwirkt, zugewandt sind.

Besonders vorteilhaft kann ein Gehäuseteil 4 von einem Strangpressprofil gebildet sein, das mehrere über eine Platte verbundene Rohrgehäuse für die Heizelemente aufweist. Dieses Gehäuseteil 4 kann mit einem zweiten Gehäuseteil 5 verbunden werden, das in seinen Seitenwänden Aussparungen für die Heizungsgehäuse 3 aufweist. Das zweite Gehäuseteil 5 liegt mit seiner Innenseite an den Heizungsgehäusen 3 an, so dass diese Wände des Kanals 1 bilden. Das zweite Gehäuseteil 5, das bevorzugt durch Gießen oder Tiefziehen hergestellt ist und die beiden Gehäuseöffnungen 6, 7 aufweist, hat auf seiner Innenseite vor jeder zweiten Aussparung eine Vertiefung 12, durch die Flüssigkeit unter dem darauf liegenden Heizungsgehäuse 3 hindurch treten kann, so dass sich ein Kanal 1 mit einem mäanderförmiger Strömungsverlauf ergibt.

### Bezugszahlen

- 1: Kanal
- 2: Tülle
- 3: Heizungsgehäuse
- 4: Gehäuseteil
- 5: Gehäuseteil
- 6: Gehäuseöffnung
- 7: Gehäuseöffnung
- 8: Dichtring
- 9: Heizelement
- 10: Kontaktplatten
- 11: Stromschienen
- 12: Vertiefung

## Patentansprüche

1. Vorrichtung zum Erwärmen von Flüssigkeiten mit
einem Gehäuse (4, 5), in dem ein von der zu erwärmenden Flüssigkeit durchströmbarer Kanal (1) verläuft, der von einer Gehäuseöffnung (6) zum Flüssigkeitseintritt zu einer Gehäuseöffnung (7) zum Flüssigkeitsaustritt führt,
wobei der Kanal (1) an einer Gehäusewand entlang verläuft, die wenigstens ein Heizungsgehäuse (3) trägt, in dem wenigstens ein elektrisches Heizelement (9) angeordnet ist,
und wobei das Heizungsgehäuse (3) ein Vierkantrohr ist,
**dadurch gekennzeichnet, dass** der Kanal (1) mit mehreren Windungen an der Gehäusewand entlang verläuft, die das Heizungsgehäuse (3) trägt, und mehrere Heizungsgehäuse (3) von einem einzigen Strangpressprofil gebildet sind.

2. Vorrichtung nach Anspruch 1, **dadurch gekennzeichnet, dass** die Gehäuseöffnung (6) zum Flüssigkeitseintritt eine größere Querschnittsfläche als der Kanal (1) hat.

3. Vorrichtung nach einem der vorstehenden Ansprüche, **dadurch gekennzeichnet, dass** die Gehäuseöffnung (6) zum Flüssigkeitseintritt eine größere Weite als der Kanal (1) hat.

4. Vorrichtung nach einem der vorstehenden Ansprüche, **dadurch gekennzeichnet, dass** das Gehäuse aus zwei Gehäuseteilen (4, 5) zusammengefügt ist, zwischen denen der Strömungskanal (1) verläuft.

5. Vorrichtung nach Anspruch 4, **dadurch gekennzeichnet, dass** wenigstens eines der Gehäuseteile (5) ein Gussteil ist.

6. Vorrichtung nach Anspruch 5, **dadurch gekennzeichnet, dass** die beiden Gehäuseöffnungen (6, 7) in dem gegossenen Gehäuseteil (5) angeordnet sind.

7. Vorrichtung nach einem der vorstehenden Ansprüche, **dadurch gekennzeichnet, dass** das Heizungsgehäuse (3) einstückig mit der Gehäusewand ausgebildet ist.

8. Vorrichtung nach einem der vorstehenden Ansprüche, **dadurch gekennzeichnet, dass** die beiden Gehäuseöffnungen (6, 7) in einer Gehäusewand angeordnet sind, die der das Heizungsgehäuse (3) tragenden Gehäusewand gegenüberliegt.

9. Vorrichtung nach einem der vorstehenden Ansprüche, **dadurch gekennzeichnet, dass** das Strangpressprofil die Gehäusewand bildet.

10. Vorrichtung nach einem der vorstehenden Ansprüche, **dadurch gekennzeichnet, dass** das wenigstens eine Heizelement (9) ein PTC-Heizelement ist, das in dem Heizungsgehäuse (3) zwischen zwei gegenüber dem Heizungsgehäuse (3) elektrisch isolierten Kontaktplatten (10) angeordnet ist, die aus dem Heizungsgehäuse (3) herausragen.

11. Vorrichtung nach Anspruch 10, **dadurch gekennzeichnet, dass** die Kontaktplatten (10) zur Spannungsversorgung an quer zu ihrer Längsrichtung verlaufenden Stromschienen (11) angeschlossen sind.

12. Vorrichtung nach einem der vorstehenden Ansprüche, **dadurch gekennzeichnet, dass** das wenigstens eine Heizungsgehäuse (3) an einer Außenseite des Gehäuses (4, 5) angeordnet ist.

13. Verwendung einer Vorrichtung nach einem der vorstehenden Ansprüche zum Erwärmen einer wässrigen Flüssigkeit, insbesondere einer Mischung aus Wasser und Frostschutzmittel, in einem Fahrzeug.

## Claims

1. An apparatus for heating fluids, comprising
a housing (4, 5) in which a duct (1) runs, through which the fluid to be heated can flow and which leads from a housing opening (6) for fluid to enter to a housing opening (7) for fluid to exit,
wherein the duct (1) extends along a housing wall carrying at least one heater housing (3), in which at least one electric heating element (9) is arranged,
and wherein the heater housing (3) is a rectangular tube,
**characterized in that** the duct (1) extends along the housing wall, which carries the heater housing (3), in several convolutions and **in that** several heater housings (3) are provided by a single extruded section.

2. An apparatus according to claim 1, **characterized in that** the housing opening (6) for fluid to enter has a larger cross-sectional surface than the duct (1).

3. An apparatus according to any one of the preceding claims, **characterized in that** the housing opening (6) for fluid to enter has a larger width than the duct (1).

4. The apparatus according to any one of the preceding claims, **characterized in that** the housing is composed of two housing parts (4, 5), between which the flow duct (1) runs.

5. The apparatus according to claim 4, **characterized in that** at least one of the housing parts (5) is a casting.

6. The apparatus according to claim 5, **characterized in that** the two housing openings (6, 7) are arranged in the cast housing part (5).

7. An apparatus according to any one of the preceding claims, **characterized in that** the heater housing (3) is integral with the housing wall.

8. An apparatus according to any one of the preceding claims, **characterized in that** the two housing openings (6, 7) are arranged in a housing wall located opposite of the housing wall carrying the heater housing (3).

9. The apparatus according to any one of the preceding claims, **characterized in that** the extruded section forms the housing wall.

10. An apparatus according to any one of the preceding claims, **characterized in that** the at least one heating element (9) is a PTC heating element which is arranged in the heater housing (3) between two contact plates (10) that are electrically insulated with respect to the heater housing (3) and protrude from the heater housing (3).

11. The apparatus according to claim 10, **characterized in that** the contact plates (10) are connected to bus bars (11) running transversely to the longitudinal direction thereof for power supply purposes.

12. An apparatus according to any one of the preceding claims, **characterized in that** the at least one heater housing (3) is arranged on an outside of the housing (4, 5).

13. Use of an apparatus according to any one of the preceding claims for heating an aqueous fluid, particularly a mixture made of water and antifreeze agent, in a vehicle.

## Revendications

1. Dispositif pour le réchauffement de liquides, avec
un boîtier (4, 5) dans lequel s'étend un canal (1) susceptible d'être traversé par le liquide à réchauffer, lequel mène d'une ouverture de boîtier (6) pour l'entrée de liquide jusqu'à une ouverture de boîtier (7) pour la sortie de liquide,
dans lequel le canal (1) s'étend le long d'une paroi de boîtier portant au moins un boîtier de chauffage (3) dans lequel est agencé un élément chauffant électrique (9),
et dans lequel le boîtier de chauffage (3) est un tube rectangulaire,
**caractérisé en ce que** le canal (1) s'étend avec plusieurs spires le long de la paroi de boîtier portant le boîtier de chauffage (3), et plusieurs boîtiers de chauffage (3) sont formés à partir d'un seul profilé extrudé.

2. Dispositif selon la revendication 1, **caractérisé en ce que** l'ouverture de boîtier (6) pour l'entrée de liquide présente une plus grande aire de section que le canal (1).

3. Dispositif selon l'une des revendications précédentes, **caractérisé en ce que** l'ouverture de boîtier (6) pour l'entrée de liquide présente un plus grand diamètre que le canal (1).

4. Dispositif selon l'une des revendications précédentes, **caractérisé en ce que** le boîtier est assemblé à partir de deux pièces de boîtier (4, 5) entre lesquelles s'étend le canal d'écoulement (1).

5. Dispositif selon la revendication 4, **caractérisé en ce qu'**au moins l'une des pièces de boîtier (5) est une pièce moulée.

6. Dispositif selon la revendication 5, **caractérisé en ce que** les deux ouvertures de boîtier (6, 7) sont agencées dans la pièce de boîtier moulée (5).

7. Dispositif selon l'une des revendications précédentes, **caractérisé en ce que** le boîtier de chauffage (3) est conçu d'une seule pièce avec la paroi de boîtier.

8. Dispositif selon l'une des revendications précédentes, **caractérisé en ce que** les deux ouvertures de boîtier (6, 7) sont agencées dans une paroi de boîtier opposée à la paroi de boîtier portant le boîtier de chauffage (3).

9. Dispositif selon l'une des revendications précédentes, **caractérisé en ce que** le profilé extrudé forme la paroi de boîtier.

10. Dispositif selon l'une des revendications précédentes, **caractérisé en ce que** l'au moins un élément chauffant (9) est un élément chauffant PTC agencé dans le boîtier de chauffage (3) entre deux plaques de contact (10) électriquement isolées par rapport au boîtier de chauffage (3), lesquelles sont saillie hors du boîtier de chauffage (3).

11. Dispositif selon la revendication 10, **caractérisé en ce que** les plaques de contact (10) sont raccordées à des rails electriques (11) s'étendant perpendiculairement à leur direction longitudinale, pour l'alimentation en tension.

12. Dispositif selon l'une des revendications précédentes, **caractérisé en ce que** l'au moins un boîtier de chauffage (3) est agencé sur un côté extérieur du boîtier (4, 5).

13. Utilisation d'un dispositif selon l'une des revendications précédentes, pour le réchauffement d'un liquide aqueux, en particulier d'un mélange d'eau et d'antigel, dans un véhicule.
